# EUROPEAN PATENT APPLICATION

(11) **EP 4 693 025 A1**
(43) Date of publication of application: **11.02.2026**
(21) Application number: 23934652.1
(22) Date of filing: 28.04.2023
(51) Int. Cl.: G06F 8/60, G06N 20/00

(54) **METHOD AND SYSTEM FOR DEPLOYING ARTIFICIAL INTELLIGENCE MODEL IN EDGE DEVICE, DEVICE, AND MEDIUM**

(71) Applicant: Siemens Aktiengesellschaft, 80333 München (DE)
(72) Inventor: RAO, Xin, Shanghai 200082 (CN); ANICET ZANINI, Rafael, 91058 Erlangen (DE); HU, Fei Huang, Shanghai 200082 (CN); TANG, Li San, Shanghai 200082 (CN); SUN, Peng Yuan, Shanghai 200082 (CN)
(74) Representative: Isarpatent
(86) International application number: PCT/CN2023/091847
(87) International publication number: WO 2024/221461

(57) **Abstract**

Disclosed are a method and system for deploying an artificial intelligence (AI) model in an edge device, a device, and a medium. The method includes: acquiring a trained AI model; generating a first deployment file, where the first deployment file includes the AI model, a workflow description file, a wrapper script, and a dependency library; the workflow description file is adapted to describe a workflow in the edge device, and the workflow includes an inference node deployed with the AI model; the dependency library is adapted to create a running environment for each node in the workflow; and the wrapper script is adapted to run each node in the workflow; and sending the first deployment file to the edge device, to enable the edge device to generate the workflow based on the workflow description file, create the running environment for each node in the workflow based on the dependency library, and run each node in the workflow based on the wrapper script. The AI model can be deployed in the edge device conveniently and trained anew through real-time data of the edge device, so that the accuracy of the model is improved.

## Description

### TECHNICAL FIELD

The present disclosure relates to the technical field of artificial intelligence (AI), and in particular, to a method and system for deploying an AI model in an edge device, a device, and a medium.

### BACKGROUND

In the field of information technology (IT), there have been complex artificial intelligence (AI) training frameworks, but a specific deployment method for an industrial scenario has not been available at present. Moreover, in the field of communication technology (OT), although experience of model deployment and automatic integration is accumulated, only simple AI model training can be conducted, which can hardly be comparable to the AI training framework in the field of IT.

There has been a lack of a good solution to integrate an AI model into an automatic system so far.

### SUMMARY

A method and system for deploying an artificial intelligence (AI) model in an edge device, a device, and a storage medium are provided in implementations of the present disclosure.

In a first aspect, a method for deploying an AI model in an edge device is provided. The method includes:
acquiring a trained AI model;
generating a first deployment file, where the first deployment file includes the AI model, a workflow description file, a wrapper script, and a dependency library; the workflow description file is adapted to describe a workflow in the edge device, and the workflow includes an inference node deployed with the AI model; the dependency library is adapted to create a running environment for each node in the workflow; and the wrapper script is adapted to run each node in the workflow; and
sending the first deployment file to the edge device, to enable the edge device to generate the workflow based on the workflow description file, create the running environment for each node in the workflow based on the dependency library, and run each node in the workflow based on the wrapper script.

In a second aspect, a system for deploying an AI model in an edge device is provided. The system includes:
a configuration apparatus used for acquiring a trained AI model; generating a first deployment file, where the first deployment file includes the AI model, a workflow description file, a wrapper script, and a dependency library, the workflow description file is adapted to describe a workflow in the edge device, the workflow includes an inference node deployed with the AI model, the dependency library is adapted to create a running environment for each node in the workflow, and the wrapper script is adapted to run each node in the workflow; and sending the first deployment file to the edge device; and
the edge device used for generating the workflow based on the workflow description file, creating the running environment for each node in the workflow based on the dependency library, and running each node in the workflow based on the wrapper script.

In a third aspect, an electronic device is provided. The electronic device includes:
a processor; and
a memory used for storing executable instructions of the processor; where
the processor is used for reading the executable instructions from the memory and executing the executable instructions to implement the above method for deploying an AI model in an edge device.

In a fourth aspect, a computer-readable storage medium is provided. The computer-readable storage medium stores computer instructions, where the computer instructions, when executed by a processor, implement the above method for deploying an AI model in an edge device.

In a fifth aspect, a computer program product is provided. The computer program product includes a computer program, where the computer program, when executed by a processor, implements the above method for deploying an AI model in an edge device.

It can be seen from the above technical solutions that in the implementations of the present disclosure, the trained AI model is acquired. The first deployment file is generated, where the first deployment file includes the AI model, the workflow description file, the wrapper script, and the dependency library. The workflow description file is adapted to describe the workflow in the edge device, and the workflow includes the inference node deployed with the AI model. The dependency library is adapted to create the running environment for each node in the workflow. The wrapper script is adapted to run each node in the workflow. The first deployment file is sent to the edge device, so that the edge device generates the workflow based on the workflow description file, creates the running environment for each node in the workflow based on the dependency library, and runs each node in the workflow based on the wrapper script. It can be seen that by including the workflow description file describing the workflow in the edge device and the AI model in the deployment file, the AI model can be deployed in the edge device and integrated into an automatic system conveniently. Also, the AI model can be trained anew through the real-time data of the edge device, so that the accuracy of the model can be improved.

### BRIEF DESCRIPTION OF THE DRAWINGS

Preferred embodiments of the present disclosure are described in detail below with reference to the accompanying drawings, so that those of ordinary skill in the art can have clearer understanding of the above and other features and advantages of the present disclosure. In the accompanying drawings:
FIG. 1 is a flowchart of a method for deploying an artificial intelligence (AI) model according to an implementation of the present disclosure.
FIG. 2 is a schematic diagram of a cyclic process of deploying an AI model according to an implementation of the present disclosure.
FIG. 3 is a schematic diagram of generating a deployment file according to an implementation of the present disclosure.
FIG. 4 is a schematic diagram of a workflow according to an implementation of the present disclosure.
FIG. 5 is a structural diagram of a system for deploying an artificial intelligence model in an edge device according to an implementation of the present disclosure.
FIG. 6 is an illustrative structural diagram of an electronic device according to an implementation of the present disclosure.

**Reference Numerals:**

| Reference number | Meaning |
|---|---|
| 101-103 | Step |
| 201 | Model training process |
| 202 | Model deployment process |
| 203 | Monitoring and data collection process |
| 204 | Tag and data analysis process |
| 205 | Artificial intelligence (AI) personnel |
| 206 | Deployment engineer |
| 207 | On-site management engineer |
| 21 | Artificial intelligence model |
| 22 | Workflow description file |
| 23 | Wrapper script |
| 24 | Dependency library |
| 25 | Deployment file |
| 301 | Data preprocessing node |
| 302 | First portion of monitoring node |
| 303 | Inference node |
| 304 | Second portion of monitoring node |
| 305 | Data postprocessing node |
| 306 | Bus |
| 501 | Configuration apparatus |
| 502 | Edge device |
| 503 | Management device |
| 51 | Training data collection process |
| 52 | Model training process |
| 53 | Deployment file generation process |
| 54 | Configure a workflow |
| 55 | Run a workflow |
| 56 | Data processing process |
| 57 | Training data generation process |
| 600 | Electronic device |
| 601 | Processor |
| 602 | Memory |

### DETAILED DESCRIPTION

To make the objectives, technical solutions, and advantages of the present disclosure clearer, the present disclosure is further described in detail below with reference to embodiments.

For brief and intuitive description, the solutions of the present disclosure are set forth by describing several representative implementations below. Lots of details in the implementations are merely used to assist understanding of the solutions of the present disclosure. However, it is obvious that implementation of the technical solutions of the present disclosure may not be limited to these details. To avoid unnecessarily obscuring the solutions of the present disclosure, only frameworks are provided without describing some implementations in detail. In the following description, "comprise" and "include" indicate "comprise, but is not limited to" and "include, but is not limited to", and "according to..." indicates "at least according to..., but is not limited to only according to...". Because of the Chinese language habit, when the number of one element is not particularly specified below, it indicates that one or more elements can be provided, or it can be understood that at least one element can be provided.

Currently, there is a lack of a complete end-to-end (E2E) artificial intelligence (AI) solution in the industrial field. The solution includes artificial intelligence solution planning, artificial intelligence model training, AI model deployment on an edge device, AI model monitoring and data collection during running, AI model retraining, etc. An E2E solution for filling the blank is provided in the implementations of the present disclosure. The solution is especially applicable to the industrial field.

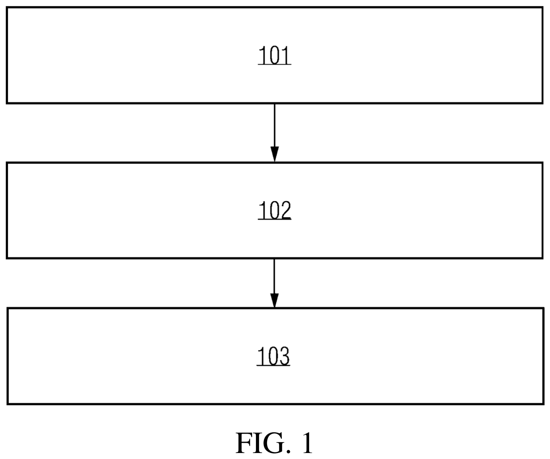

FIG. 1 is a flowchart of a method for deploying an AI model according to an implementation of the present disclosure. As shown in FIG. 1, the method includes:
Step 101: A trained AI model is acquired.

In one implementation, step 101 specifically includes: an untrained AI model is trained based on predetermined training data, to obtain the trained artificial intelligence model.

In another implementation, step 101 specifically includes: the trained artificial intelligence model is acquired from an AI training platform. For example, the AI training platform may include: TensorFlow, PyTorch, MXNet, CNTK, etc.

It can be seen that in the implementations of the present disclosure, the trained AI model may be obtained through training or acquired from a third-party platform. The AI model is adapted to provide various specific functions for a workflow executed in the edge device. For example, the AI model may be implemented as a perforation detection model, a painting color detection model, a miswelding spot detection model, etc. The workflow may be simply defined as descriptions of a series of operation processes executed by the edge device. For example, a workflow executed in an edge device of a product sorting line may be simply described as activating, photographing, classifying, and moving a product to a target position.

Step 102: A first deployment file is generated, where the first deployment file includes an AI model, a workflow description file, a wrapper script, and a dependency library. The workflow description file is adapted to describe a workflow in the edge device, and the workflow includes an inference node deployed with the AI model. The dependency library is adapted to create a running environment for each node in the workflow. The wrapper script is adapted to run each node in the workflow.

The workflow description file specifically includes nodes included in the workflow and an execution sequence among the nodes. The workflow includes the inference node. The inference node may be deployed with the AI model and may achieve an inference function through the AI model. For example, the workflow description file may be implemented in a YML file format, a Json file format, etc. The edge device may conveniently determine a specific workflow by parsing the workflow description file. The dependency library is adapted to create the running environment for each node in the workflow.

For example, the dependency library may be of:
(1) Image/data processing types such as numpy and OpenCV:
(2) Model use types such as tensorrt and torchvision:
(3) Hardware driving types such as pycuda.

The wrapper script is adapted to run each node in the workflow. The wrapper script is a script in which a system command or a tool is embedded, and the script retains a series of parameters transmitted to each node. Each node in the workflow may be run based on the parameter transmitted by the wrapper script to each node.

The first deployment file may be specifically implemented as a compressed file or may be implemented in a ZIP file format, an RAR file format, etc.

It can be seen that the first deployment file includes the AI model (for example, from the field of information technology (IT)), the workflow description file used for describing the workflow (for example, the workflow in the field of communication technology (OT)) in the edge device, and a support file used for running the workflow. Thus, the AI model deployment and workflow running may be achieved in the edge device simultaneously, thereby implementing fusion of the fields of IT and OT.

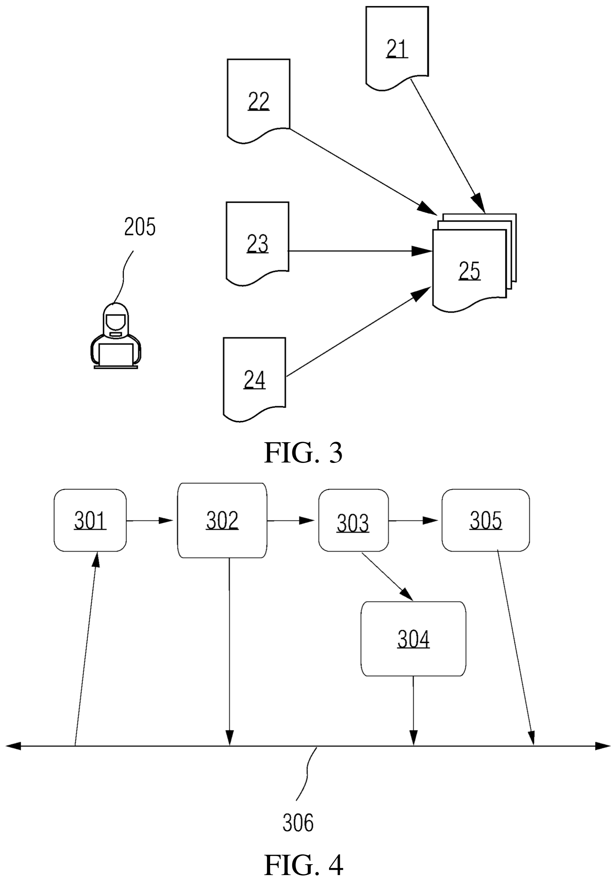

FIG. 3 is a schematic diagram of generating a deployment file according to an implementation of the present disclosure.

In FIG. 3, the AI personnel 205 combine and package the trained AI model 21, the workflow description file 22, the wrapper script 23, and dependency library 24 into a deployment file 25. The edge device may establish and run the workflow based on the workflow description file 22, the dependency library 24, and the wrapper script 23 that are included in the deployment file 25. Moreover, the AI model 21 is deployed in the inference node of the workflow. Thus, based on the deployment file 25, complete deployment work of the workflow including the AI model 21 may be implemented.

Step 103: The first deployment file is sent to the edge device, so that the edge device generates the workflow based on the workflow description file, creates the running environment for each node in the workflow based on the dependency library, and runs each node in the workflow based on the wrapper script.

Herein, the edge device is a device that provides an entry point for a core network of an enterprise or a service provider. For example, the edge device is a router, a routing switch, an integrated access device (IAD), a multiplexor, various metropolitan area network (MAN) and wide area network (WAN) access devices, etc.

Preferably, the edge device is implemented as an industrial edge device. For example, the edge device includes: (1) an industrial Ethernet switch; (2) an industrial fixed Ethernet router; (3) an industrial fixed Ethernet gateway; (4) an industrial fixed cellular router; (5) an industrial fixed cellular gateway; (6) an industrial wireless router and an access point; and (7) an industrial wireless gateway.

The edge device parses the first deployment file to obtain the workflow description file, the AI model, the wrapper script, and the dependency library. The edge device creates the workflow including the inference node in the edge device based on the workflow description file, and deploys the AI model in the inference node. Moreover, the edge device creates the running environment for each node in the workflow based on the dependency library, and runs each node in the workflow based on the wrapper script.

With the ongoing increase in demand of different industries for the AI model, when the AI model is deployed on the edge device (for example, an industrial edge device), it is crucial to ensure performance of the AI model. Generally, a deployed AI model is probably incapable of working as expected due to many reasons: reduction of quality of generated input data; and difference between data distribution in a production stage and data distribution in a training stage. Thus, monitoring the AI model is crucial to the edge AI. Currently, some cloud providers or open source software packages provide available AI monitoring solutions. However, they are limited when applied to the edge device. These solutions require a user to periodically upload training data and production data to a cloud, and a monitoring result is only displayed on the cloud. Thus, there are at least the following limitations: (1) Data are required to be uploaded and stored in the cloud, which is generally unacceptable by a factory. (2) The generation data are sent to the cloud at an interval, so that the monitoring result is delayed. (3) The monitoring result is displayed in the cloud without being directly notified to the operation engineer of the factory, and thus the operation engineer cannot acquire the monitoring result in time.

In one implementation, the workflow described through the workflow description file further includes a monitoring node, and the monitoring node is adapted to verify input data of the AI model, and/or inspect performance of the AI model. Specifically, the monitoring node may include a first portion. The first portion is arranged at an input end of the AI model, and adapted to verify the input data based on a matching result between the input data of the AI model and a first boundary constraint rule. The first boundary constraint rule is determined based on training data of the AI model. The monitoring node may include a second portion. The second portion is arranged at an output end of the AI model, and adapted to inspect the performance of the AI model based on a matching result between output data of the AI model and a second boundary constraint rule. The second boundary constraint rule is determined based on training data of the AI model.

Preferably, the monitoring node includes the first portion and the second portion simultaneously. The first portion is arranged at an input end of the AI model, and adapted to verify the input data based on a matching result between the input data of the AI model and the first boundary constraint rule. The second portion is arranged at an output end of the AI model, and adapted to inspect performance of the AI model based on a matching result between output data of the AI model and a second boundary constraint rule. The first boundary constraint rule and the second boundary constraint rule are determined based on training data of the AI model.

Specific examples and specific deployment methods of the monitoring node are illustratively described above. Those skilled in the art can realize that the description is merely illustrative, and is not intended to limit the scope of protection of the implementations of the present disclosure.

The first portion is arranged at the input end of the AI model, and adapted to verify the input data based on the matching result between the input data of the AI model and the first boundary constraint rule. The second portion is arranged at the output end of the AI model, and adapted to inspect the performance of the AI model based on the matching result between the output data of the AI model and the second boundary constraint rule. The first boundary constraint rule and the second boundary constraint rule are determined based on the training data of the AI model.

FIG. 4 is a schematic diagram of a workflow according to an implementation of the present disclosure. In FIG. 4, a workflow includes a data preprocessing node 301, a first portion 302 of the monitoring node, an inference node 303, a second portion 304 of the monitoring node, a data postprocessing node 305, and a bus 306. The data preprocessing node 301 is used for reading input data of an AI model in the inference node 303 from the bus 306, and preprocessing the input data. The first portion 302 of the monitoring node is used for verifying legality of preprocessed input data, and sending a verification result to the bus 306. The AI model in the inference node performs inference based on the input data, and generates output data. The second portion 304 of the monitoring node inspects performance of the AI model based on the output data, and sends an inspection result to the bus 306. The data postprocessing node 305 postprocesses the output data.

A typical execution process of a workflow is illustratively described above. Those skilled in the art can realize that the description is merely illustrative, and is not intended to limit the scope of protection of the implementations of the present disclosure.

A process of generating the first boundary constraint rule and the second boundary constraint rule is specifically described below.

### (1) A process of generating the first boundary constraint rule

In one implementation, the process of generating the first boundary constraint rule includes: a basic indicator of the input data of the AI model is determined; an advanced indicator of the input data is determined based on the basic indicator of the input data; the input data of the AI model is determined from the training data of the AI model; a value range of the advanced indicator of the input data is determined based on the input data determined from the training data of the AI model; and the first boundary constraint rule is determined based on the value range of the advanced indicator of the input data determined from the training data of the AI model. Herein, the basic indicator of the input data indicates a basic quality metric of the input data of the AI model, and may be implemented as a basic statistical feature of the input data, such as a minimum in the input data, a maximum in the input data, a type of the input data, a required value of the input data, an average of the input data, a median of the input data, a variance of the input data, a standard deviation of the input data, an absolute value and a relative value of the input data, a percentage and a percent of the input data, a frequency value and a frequency of the input data, a proportion and a ratio of the input data, a multiple and an exponent of the input data, a year-on-year ratio and a month-on-month ratio of the input data, and a number of missing values of an attribute in the input data. A user may select the basic indicator. Alternatively, a default basic indicator may be automatically recommended to the user. The basic indicator establishes a baseline for monitoring. For the deeper analysis demand, an advanced indicator for monitoring and inspecting may be applied. The advanced indicator of the input data is an indicator obtained by performing deduction for a basic indicator of one or more pieces of input data. For example, the advanced indicator includes a value proportion less than the average, a value proportion greater than the average, a value proportion beyond a value range of the basic indicator determined by the minimum and the maximum, a missing rate derived by dividing the number of the missing values of one attribute in the input data by a number of pieces of the data, etc. A specific value of the basic indicator of the input data in the training data is obtained, and a value range of the advanced indicator is calculated based on the specific value of the basic indicator, to serve as a basis for determining the legality of the input data subsequently.

In one implementation, the process of generating the first boundary constraint rule includes: a basic indicator of the input data of the AI model is determined; an advanced indicator of the input data is determined based on the basic indicator of the input data; a user-customized indicator of the input data is determined based on the basic indicator of the input data and/or the advanced indicator of the input data; second input data of the AI model are determined from the training data of the AI model; a first value range of the advanced indicator of the input data and a second value range of the user-customized indicator of the input data are determined based on the second input data; and the first boundary constraint rule is determined based on the first value range and the second value range. It can be seen that the user-customized indicator of the input data is further determined based on a basic user indicator of the input data and/or the advanced indicator of the input data. The user-customized indicator of the input data may be an indicator specified by the user. The user-customized indicator of the input data may be obtained by performing deduction for the advanced indicator of one or more of pieces of input data, or may be obtained by performing deduction for the basic indicator of one or more pieces of input data and the advanced indicator of one or more pieces of input data. For example, the basic indicator is an average of the input data. The advanced indicator indicates a value proportion less than the average and a value proportion greater than the average. The user-customized indicator is a ratio of the value proportion less than the average to the value proportion greater than the average.

### (2) A process of generating the second boundary constraint rule

In one implementation, the process of generating the second boundary constraint rule includes: a basic indicator of the output data of the AI model is determined; an advanced indicator of the output data is determined based on the basic indicator of the output data; the output data of the AI model are determined from the training data of the AI model; a value range of the advanced indicator of the output data is determined based on the output data determined from the training data; and the second boundary constraint rule is determined based on the value range of the advanced indicator of the output data. Similarly, the basic indicator of the output data indicates a basic quality metric of the output data of the AI model, and may be implemented as a basic statistical feature of the output data. Herein, the basic indicator of the output data may include: a minimum in the output data, a maximum in the output data, a type of the output data, a required value of the output data, an average of the output data, a median of the output data, a variance of the output data, a standard deviation of the output data, an absolute value and a relative value of the output data, a percentage and a percent of the output data, a frequency value and a frequency of the output data, a proportion and a ratio of the output data, a multiple and an exponent of output data, a year-on-year ratio and a month-on-month ratio of the output data, a number of missing values of an attribute in the output data, etc. A user may select the basic indicator of the output data. Alternatively, a default basic indicator of the output data may be automatically recommended to the user. The advanced indicator of the output data is an indicator obtained by performing deduction for a basic indicator of one or more pieces of output data. For example, the advanced indicator includes a value proportion less than the average, a value proportion greater than the average, a value proportion beyond a value range of the basic indicator determined by the minimum and the maximum, a missing rate derived by dividing the number of the missing values of one attribute in the output data by a number of pieces of the data, etc.

In one implementation, the process of generating the second boundary constraint rule includes: a basic indicator of the output data of the AI model is determined; an advanced indicator of the output data is determined based on the basic indicator of the output data; a user-customized indicator of the output data is determined based on the basic indicator of the output data and/or the advanced indicator of the output data; the output data of the AI model are determined from the training data of the AI model; a first value range of the advanced indicator of the output data and a second value range of the user-customized indicator of the output data are determined based on the output data determined from the training data of the AI model; and the second boundary constraint rule is determined based on the first value range and the second value range. It can be seen that the user-customized indicator of the output data is further determined based on the basic user indicator of the output data and/or the advanced indicator of the output data. The user-customized indicator of the output data may be an indicator specified by the user. The user-customized indicator of the output data may be obtained by performing deduction for the advanced indicator of one or more of pieces of output data, or may be obtained by performing deduction for the basic indicator of one or more pieces of output data and the advanced indicator of one or more pieces of output data. For example, the basic indicator of the output data is an average of the output data. The advanced indicator of the output data indicates a value proportion less than the average and a value proportion greater than the average. The user-customized indicator of the output data is a ratio of the value proportion less than the average to the value proportion greater than the average.

After deployment of the workflow is completed, the workflow is run. In a process of running the workflow, at the monitoring node, based on a matching result between real-time input data input into the AI model in an execution process of the workflow and the first boundary constraint rule, the real-time input data may be verified. Alternatively, performance of the AI model may be inspected based on a matching result between real-time output data output from the AI model in an execution process of the workflow and the second boundary constraint rule. For example:
(1) When a value of the advanced indicator of the real-time input data is beyond the value range, it is determined that the first boundary constraint rule is not matched, where a verification result indicates that the real-time input data are illegal.
(2) When a value of the advanced indicator of the real-time input data is within the value range, it is determined that the first boundary constraint rule is matched, where a verification result indicates that the real-time input data is legal.
(3) When a value of the advanced indicator of the real-time output data is beyond the value range, it is determined that the second boundary constraint rule is not matched, where an inspection result indicates that the performance of the AI model is unqualified.
(4) When a value of the advanced indicator of the real-time output data is within the value range, it is determined that the second boundary constraint rule is matched, where an inspection result indicates that the performance of the AI model is qualified.

Real-time data in the industrial site is conducive to retraining of the model. In one implementation, the method shown in FIG. 1 further includes: real-time input data of the AI model in the execution process of the workflow are acquired; updated training data are determined based on the real-time input data and a tag addition operation for the real-time input data; the AI model is trained anew based on the updated training data; and the AI model trained anew is sent to the edge device, so that the edge device updates the AI model based on the AI model trained anew. In this implementation, the service logic of the workflow is not changed, and only the AI model needs to be updated.

When the service logic of the workflow is changed, a new deployment file may be issued to update the workflow and the AI model trained anew.

In one implementation, the method shown in FIG. 1 further includes: real-time input data of the AI model in the execution process of the workflow are acquired; updated training data are determined based on the real-time input data and a tag addition operation for the real-time input data; the AI model is trained anew based on the updated training data; a second deployment file is generated, where the second deployment file includes the AI model trained anew, an updated workflow description file, an updated wrapper script, and an updated dependency library; the updated workflow description file is adapted to describe the updated workflow in the edge device, and the updated workflow includes an inference node deployed with the AI model trained anew; the updated dependency library is adapted to create a running environment for each node in the updated workflow; and the updated wrapper script is adapted to run each node in the updated workflow; and the second deployment file is sent to the edge device, so that the edge device generates the updated workflow based on the updated workflow description file, creates the running environment for each node in the updated workflow based on the updated dependency library, and runs each node in the updated workflow based on the updated wrapper script. In this implementation, the service logic of the workflow is changed, and the AI model is updated. Simultaneous update of the workflow and the AI model may be implemented through one deployment file.

It can be seen that in the implementations of the present disclosure, one complete E2E AI solution (especially applicable to the industrial field) is implemented. The solution includes AI solution planning, AI model training, AI model deployment on the edge device, AI model monitoring and data collection during running, and AI model retraining.

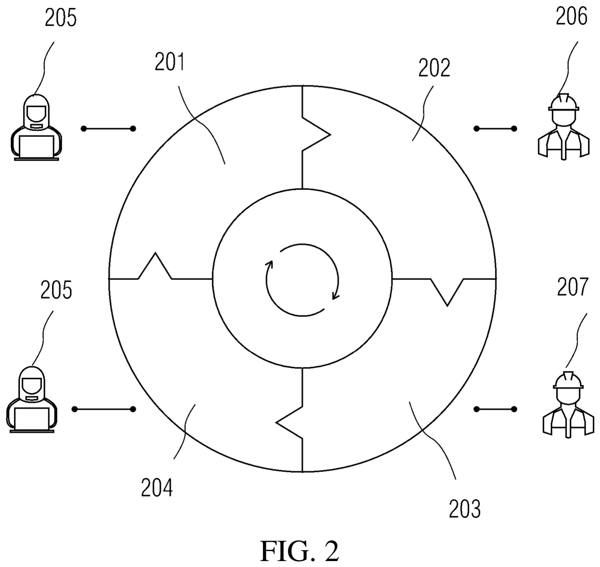

FIG. 2 is a schematic diagram of a cyclic process of deploying an AI model according to an implementation of the present disclosure. In FIG. 2, the AI personnel 205 perform a model training process 201 to obtain an AI model through training, and generate a deployment file. The deployment engineer 206 performs a model deployment process 202 based on the deployment file in an operation site of the edge device. The on-site management engineer 207 performs a monitoring and data collection process 203, during which real-time input data are collected. The AI personnel train the AI model anew based on the real-time input data, and generate a deployment file including the AI model trained anew, so that the complete cycle is achieved.

Specifically, the cycle starts from a model training step. The AI personnel 205 participate in the model training step, train one or more AI models, and generate one deployment file (such as a deployable package) including the trained AI model. Next, the deployment file is sent to the deployment engineer 206. The deployment engineer 206 configures and deploys the file on the edge device, and enables a workflow to run. Then, the on-site management engineer 207 observes the running workflow, receives a log, an alarm message, etc., and communicates with the AI personnel 205, to ensure that the model runs in an expected manner. Moreover, the data are collected from model prediction and model monitoring results, and these data are retained for next work. The AI personnel 205 analyze a data quality, model performance, etc. through the saved data. If willing, the AI personnel 205 may further mark data, train the AI model anew through marked data, and generate a new deployment file. Then, the deployment engineer 206 may deploy a new deployment file on the edge device.

An entire cyclic process may be one model deployment and optimization period. Model training, model deployment, and monitoring a running model may be performed separately or may be combined. A set of operation procedures are provided in the implementations of the present disclosure, to instruct the AI personnel 205 to train the AI model, and encapsulate the AI model in the deployment file used for the edge device. The deployment file describes one workflow (for example, a pipeline), and the workflow defines the way to deploy and monitor the model on the edge device. Generally, the workflow includes one or more nodes and one data bus. For each node, the input data may come from the data bus or another node in the workflow, and the output data may be sent to another node or the data bus. The deployment file may be simply imported into an application on the edge device, and may be easily run on the edge device in a case of a small parameter setting.

When the workflow starts to be run on the edge device, the real-time data (the input data, the inference data, and the monitoring data) are sent to the data bus. The industry edge management (IEM) or third-party software may monitor the data bus, collect these data, and postprocess these data for further use, for example, large-scale data analysis or model retraining. In addition, the model trained anew may be encapsulated in one new deployment file, and one new workflow is run on the edge device. The inference node is a node including the trained AI model, and generates a model prediction result through the input data of the data bus. Another node may be randomly added into the pipeline for various purposes, such as a data parsing function or a monitoring addition function. The nodes in the workflow may be in sequential connection or parallel connection, which depends on the function dependency.

A complete implementation process of the implementation of the present disclosure is described below.

Step 1: Training data are prepared.

In this step, a training data template may be used to assist the AI personnel 205 in collecting a visual data set, and instruct the AI personnel 205 to manually or automatically mark the data set.

Step 2: The AI model is trained and saved.

In this step, the AI personnel 205 train and save the AI model based on the data set. Considering that the AI personnel 205 generally rely on an AI training framework provided by a third-party platform to train a high-performance and high-precision model at present, the user is further allowed to import a model saved in another AI training framework.

Step 3: The wrapper script is created.

The AI personnel 205 need one script, and is provided with parsed data from a configured data source. The template instructs the AI personnel to acquire the way for each node to work in the workflow.

Step 4: A monitoring node is configured.

In this step, the artificial intelligence scientist uses the monitoring addition function as a node, and adds the node into the workflow.

Step 5: A deployment file is created for the edge device.

Step 6: The workflow is configured and run.

In this step, the deployment engineer may import the deployment file into the application of the edge device. Then, a theme is configured for each output result on the data bus, and a parameter (if any) is configured in the wrapper script. After configuration is completed, the workflow may be run on the edge device. The workflow acquires the input data from the data bus, executes a task on each node, and sends various output data back to the data bus.

Step 7: Data are collected and postprocessed during running.

During running, if detecting abnormal data, the monitoring node may generate an alarm message. The alarm message may be viewed in a log. The on-site management engineer may troubleshoot the pipeline or the model through the alarm message. The alarm message is also sent to the data bus. The IEM or third-party software may perform real-time alarming through the data bus by sending an email or visualizing an error rate through these data.

Step 8: The data are postprocessed and the model is trained anew.

The output data during running in the previous step and on the data bus may be acquired by the edge device management system or another software/system monitoring the data bus. Due to the batch size, various data analysis methods/algorithms are not feasible during running, but once these output data are accumulated for weeks, months, or even years, analysis on these large-scale data sets is more accurate and compelling.

It is considered that many factories are transforming from a conventional mode to a more digital mode. Many potential customers may be interested in cloud service, to obtain easier management or higher computing performance. To satisfy such demand, some steps in the implementations of the present disclosure may be transferred to the cloud. For example, step 1 to step 5 may be implemented as cloud application programming interfaces (APIs). The high computing capability and the easy file management capability of the cloud service may be fully utilized to prepare the training data sets, train the model, and generate the deployable package. Step 7 and step 8 require that the IEM or another software system publishes some APIs for a cloud platform to invoke, so that the user may directly acquire the deployment file from the cloud, collect the data during running, and save the data in the cloud. Step 8 may alternatively be implemented as a cloud API, and the data scientist may postprocess the data and train the model anew on the cloud.

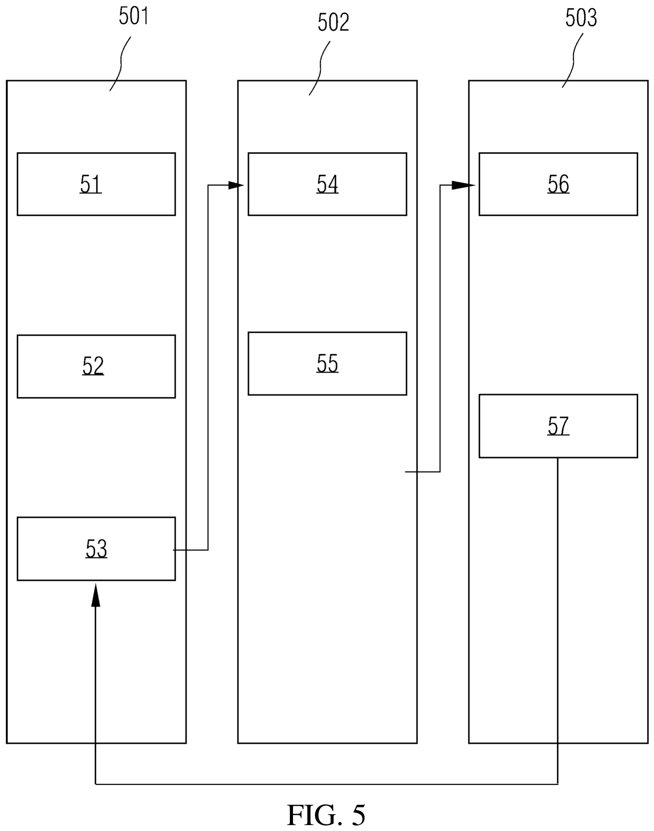

FIG. 5 is a structural diagram of a system for deploying an artificial intelligence model in an edge device according to an implementation of the present disclosure. As shown in FIG. 5, the system includes:
a configuration apparatus 501 used for acquiring a trained artificial intelligence model; generating a first deployment file, where the first deployment file includes the artificial intelligence model, a workflow description file, a wrapper script, and a dependency library, the workflow description file is adapted to describe a workflow in the edge device 502, the workflow includes an inference node deployed with the artificial intelligence model, the dependency library is adapted to create a running environment for each node in the workflow, and the wrapper script is adapted to run each node in the workflow; and sending the first deployment file to the edge device 502; and
the edge device 502 used for generating the workflow based on the workflow description file, creating the running environment for each node in the workflow based on the dependency library, and running each node in the workflow based on the wrapper script.

In one implementation, the system further includes: a management device 503 used for acquiring real-time input data of the artificial intelligence model in an execution process of the workflow; and determining updated training data based on the real-time input data and a tag addition operation for the real-time input data; where the configuration apparatus 501 is used for training the artificial intelligence model anew based on the updated training data; and sending an artificial intelligence model trained anew to the edge device 502; and the edge device 502 is used for updating the artificial intelligence model based on the artificial intelligence model trained anew.

A training data collection process 51, a model training process 52, and a deployment file generation process 53 may be executed in the configuration apparatus 501. The workflow configuration 54 and workflow running 55 may be achieved in the edge device 502. A data processing process 56 and a training data generation process 57 may be executed in the management device 503.

Preferably, the configuration apparatus 501 may be implemented as a personal computer (PC) device, the edge device 502 may be an industrial edge device, and the management device 503 may be implemented as a device on which an IEM platform runs.

In one implementation, the system further includes: a management device 503 used for acquiring real-time input data of the AI model in an execution process of the workflow; and determining updated training data based on the real-time input data and a tag addition operation for the real-time input data; where the configuration apparatus 501 is used for training the AI model anew based on the updated training data; generating a second deployment file, where the second deployment file includes an AI model trained anew, an updated workflow description file, an updated wrapper script, and an updated dependency library, the updated workflow description file is adapted to describe an updated workflow in the edge device, the updated workflow includes an inference node deployed with the AI model trained anew, the updated dependency library is adapted to create a running environment for each node in the updated workflow, and the updated wrapper script is adapted to run each node in the updated workflow; and sending the second deployment file to the edge device 502; and the edge device 502 is used for generating the updated workflow based on the updated workflow description file, creating the running environment for each node in the updated workflow based on the updated dependency library, and running each node in the updated workflow based on the updated wrapper script.

In conclusion, one E2E AI solution for the industrial field is provided in the implementations of the present disclosure. The solution includes AI solution planning, AI model training, AI model deployment on the edge device, AI model monitoring and data collection during running, and AI model retraining. Moreover, a method for deploying an AI model on an edge device as a configurable workflow, a real-time model monitoring method, and a method for training a model anew through real-time data are provided in the implementations of the present disclosure. The implementations of the present disclosure standardize an assembly line working procedure for model deployment, and provide a user with a capability to customize a model-related function. A simple E2E AI solution is provided in the implementations of the present disclosure. The solution is divided into several components, each component has clear guidance, and a specific role of a participant in each component is defined. In this way, when each role has sufficient professional knowledge to complete work, the process is well-defined and has higher efficiency. Moreover, the edge device management system or other software is provided in the implementations of the present disclosure, and used for collecting the real-time data generated by the workflow for further analysis and improvement. Also, in the implementations of the present disclosure, an independent solution in a local environment and a solution in a cloud are provided for each step, to satisfy the demand of a conventional factory and demand of a modern digital factory.

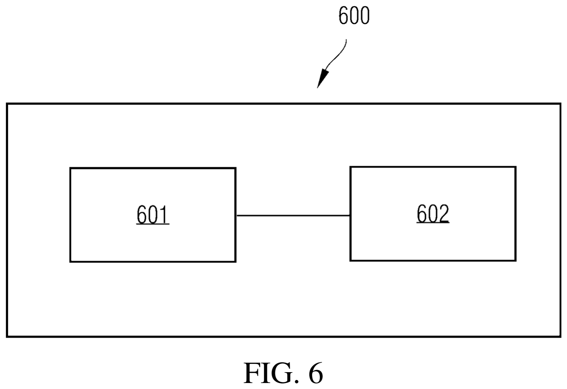

An electronic device having a processor-memory architecture is further provided in the implementations of the present disclosure. FIG. 6 is an illustrative structural diagram of an electronic device according to an implementation of the present disclosure. As shown in FIG. 6, the electronic device 600 includes a processor 61, a memory 602, and a computer program stored in the memory 602 and runnable in the processor 601. The computer program, when executed by the processor 601, implements any method for deploying an AI model in an edge device described above. The memory 602 may be specifically implemented as an electrically erasable programmable read-only memory (EEPROM), a flash memory, and a programmable read-only memory (PROM), etc. The processor 601 may be implemented as including one or more central processors or one or more field-programmable gate arrays, where the field-programmable gate array is integrated with one or more central processor cores. Specifically, the central processor or the central processor core may be implemented as a central processing unit (CPU), a microprogrammed control unit (MCU), a digital signal processor (DSP), etc.

It should be noted that not all steps and modules in the above flowcharts and structural diagrams are necessary, and some steps or modules can be omitted according to the actual needs. The execution sequence of the steps is not fixed, and can be adjusted as needed. The modules are merely divided by function for ease of description. During actual implementation, one module can be separately implemented by multiple modules, and functions of multiple modules can alternatively be implemented by the same module. These modules can be located in the same device or different devices.

The hardware modules in the implementations can be implemented mechanically or electronically. For example, one hardware module can include a specifically-designed permanent circuit or logic device (for example, a special-purpose processor, such as a field-programmable gate array (FPGA) or an application specific integrated circuit (ASIC)) used for completing a specific operation. The hardware module can alternatively include a programmable logic device or circuit (including, for example, a general-purpose processor or another programmable processor) configured temporarily by software and used for executing a specific operation. The hardware module is specifically implemented mechanically or by employing a special-purpose permanent circuit or a temporarily-configured circuit (for example, configured by software), which can be decided according to costs and time.

What are described above are merely preferred implementations of the present disclosure, and are not intended to limit the scope of protection of the present disclosure. Any modification, equivalent replacement, improvement, etc. made within the spirit and principles of the present disclosure should fall within the scope of protection of the present disclosure.

## Claims

1. A method for deploying an artificial intelligence model in an edge device, comprising:
acquiring (101) a trained artificial intelligence model;
generating (102) a first deployment file, wherein the first deployment file comprises the artificial intelligence model, a workflow description file, a wrapper script, and a dependency library; the workflow description file is adapted to describe a workflow in the edge device, and the workflow comprises an inference node deployed with the artificial intelligence model; the dependency library is adapted to create a running environment for each node in the workflow; and the wrapper script is adapted to run each node in the workflow; and
sending (103) the first deployment file to the edge device, to enable the edge device to generate the workflow based on the workflow description file, create the running environment for each node in the workflow based on the dependency library, and run each node in the workflow based on the wrapper script.

2. The method according to claim 1, wherein the workflow comprises a monitoring node, and the monitoring node is adapted to verify input data of the artificial intelligence model, and/or inspect performance of the artificial intelligence model.

3. The method according to claim 1, comprising:
acquiring real-time input data of the artificial intelligence model in an execution process of the workflow;
determining updated training data based on the real-time input data and a tag addition operation for the real-time input data;
training the artificial intelligence model anew based on the updated training data; and
sending an artificial intelligence model trained anew to the edge device, to enable the edge device to update the artificial intelligence model based on the artificial intelligence model trained anew.

4. The method according to claim 1, comprising:
acquiring real-time input data of the artificial intelligence model in an execution process of the workflow;
determining updated training data based on the real-time input data and a tag addition operation for the real-time input data;
training the artificial intelligence model anew based on the updated training data;
generating a second deployment file, wherein the second deployment file comprises an artificial intelligence model trained anew, an updated workflow description file, an updated wrapper script, and an updated dependency library; the updated workflow description file is adapted to describe an updated workflow in the edge device, and the updated workflow comprises an inference node deployed with the artificial intelligence model trained anew; the updated dependency library is adapted to create a running environment for each node in the updated workflow; and the updated wrapper script is adapted to run each node in the updated workflow; and
sending the second deployment file to the edge device, to enable the edge device to generate the updated workflow based on the updated workflow description file, create the running environment for each node in the updated workflow based on the updated dependency library, and run each node in the updated workflow based on the updated wrapper script.

5. The method according to claim 1, wherein the acquiring a trained artificial intelligence model comprises:
training an untrained artificial intelligence model based on predetermined training data, to obtain the trained artificial intelligence model; or
acquiring the trained artificial intelligence model from an artificial intelligence model training platform.

6. The method according to claim 2, wherein the monitoring node comprises a first portion; and
the first portion is arranged at an input end of the artificial intelligence model, and adapted to verify the input data based on a matching result between the input data of the artificial intelligence model and a first boundary constraint rule, and the first boundary constraint rule is determined based on training data of the artificial intelligence model.

7. The method according to claim 2, wherein the monitoring node comprises a second portion; and
the second portion is arranged at an output end of the artificial intelligence model, and adapted to inspect performance of the artificial intelligence model based on a matching result between output data of the artificial intelligence model and a second boundary constraint rule, and the second boundary constraint rule is determined based on training data of the artificial intelligence model.

8. The method according to claim 2, wherein the monitoring node comprises a first portion and a second portion;
the first portion is arranged at an input end of the artificial intelligence model, and adapted to verify the input data based on a matching result between the input data of the artificial intelligence model and a first boundary constraint rule;
the second portion is arranged at an output end of the artificial intelligence model, and adapted to inspect performance of the artificial intelligence model based on a matching result between output data of the artificial intelligence model and a second boundary constraint rule; and
the first boundary constraint rule and the second boundary constraint rule are determined based on training data of the artificial intelligence model.

9. A system for deploying an artificial intelligence model in an edge device, comprising:
a configuration apparatus (501) used for acquiring a trained artificial intelligence model; generating a first deployment file, wherein the first deployment file comprises the artificial intelligence model, a workflow description file, a wrapper script, and a dependency library, the workflow description file is adapted to describe a workflow in the edge device (502), the workflow comprises an inference node deployed with the artificial intelligence model, the dependency library is adapted to create a running environment for each node in the workflow, and the wrapper script is adapted to run each node in the workflow; and sending the first deployment file to the edge device (502); and
the edge device (502) used for generating the workflow based on the workflow description file, creating the running environment for each node in the workflow based on the dependency library, and running each node in the workflow based on the wrapper script.

10. The system according to claim 9, further comprising:
a management device (503) used for acquiring real-time input data of the artificial intelligence model in an execution process of the workflow; and determining updated training data based on the real-time input data and a tag addition operation for the real-time input data; wherein
the configuration apparatus (501) is used for training the artificial intelligence model anew based on the updated training data; and sending an artificial intelligence model trained anew to the edge device (502); and the edge device (502) is used for updating the artificial intelligence model based on the artificial intelligence model trained anew.

11. The system according to claim 9, further comprising:
a management device (503) used for acquiring real-time input data of the artificial intelligence model in an execution process of the workflow; and determining updated training data based on the real-time input data and a tag addition operation for the real-time input data; wherein
the configuration apparatus (501) is used for training the artificial intelligence model anew based on the updated training data; generating a second deployment file, wherein the second deployment file comprises an artificial intelligence model trained anew, an updated workflow description file, an updated wrapper script, and an updated dependency library, the updated workflow description file is adapted to describe an updated workflow in the edge device, the updated workflow comprises an inference node deployed with the artificial intelligence model trained anew, the updated dependency library is adapted to create a running environment for each node in the updated workflow, and the updated wrapper script is adapted to run each node in the updated workflow; and sending the second deployment file to the edge device (502); and the edge device (502) is used for generating the updated workflow based on the updated workflow description file, creating the running environment for each node in the updated workflow based on the updated dependency library, and running each node in the updated workflow based on the updated wrapper script.

12. An electronic device, comprising:
a processor (601); and
a memory (602) used for storing executable instructions of the processor (601); wherein
the processor (601) is used for reading the executable instructions from the memory (602), and executing the executable instructions to implement the method for deploying an artificial intelligence model in an edge device according to any one of claims 1 to 8.

13. A computer-readable storage medium, storing computer instructions, wherein the computer instructions, when executed by a processor, implement the method for deploying an artificial intelligence model in an edge device according to any one of claims 1 to 8.

14. A computer program product, comprising a computer program, wherein the computer program, when executed by a processor, implements the method for deploying an artificial intelligence model in an edge device according to any one of claims 1 to 8.
